# EUROPÄISCHE PATENTSCHRIFT

(11) **EP 2 923 397 B1**
(45) Veröffentlichungstag und Bekanntmachung des Hinweises auf die Patenterteilung: **27.04.2016**
(21) Anmeldenummer: 14701956.6
(22) Anmeldetag: 22.01.2014
(51) Int. Cl.: H01M 2/36

(54) **VORRICHTUNG UND VERFAHREN ZUM BEFÜLLEN EINER ZELLE EINES AKKUMULATORS MIT ELEKTROLYTFLÜSSIGKEIT**
DEVICE AND PROCESS FOR FILLING THE CELLS OF A RECHARGEABLE BATTERIE WITH LIQUID ELEKTROLYT
DISPOSITIF ET PROCÉDÉ POUR REMPLIR LES CELLULES D'UN ACCUMULATEUR AVEC DU LIQUIDE ÉLÉCTROLYTIQUE

(30) Priorität: 30.01.2013 DE 102013001576
(43) Veröffentlichungstag der Anmeldung: 30.09.2015
(73) Patentinhaber: CMWTEC Technologie GmbH, 65594 Runkel-Ennerich (DE)
(72) Erfinder: WIPPERFÜRTH, Walter, 65189 Wiesbaden (DE)
(74) Vertreter: Müller, Eckhard
(86) Internationale Anmeldenummer: PCT/EP2014/051234
(87) Internationale Veröffentlichungsnummer: WO 2014/118057

(56) Entgegenhaltungen:
- CN-Y- 2 938 426
- DE-U1- 29 915 950
- JP-A- H0 799 050
- KR-A- 20110 032 848

## Beschreibung

Die vorliegende Erfindung betrifft eine Vorrichtung zum Befüllen wenigstens einer Zelle eines Akkumulators mit Elektrolytflüssigkeit, mit einer Fülleinrichtung, mit einem evakuierbaren Dichtbehälter zum Aufnehmen der Fülleinrichtung und des Akkumulators, sowie mit einer durch die Behälterwandung geführten Zuführeinrichtung zur Versorgung der Fülleinrichtung mit Elektrolytflüssigkeit.

Ferner betrifft die Erfindung ein Verfahren zum Befüllen wenigstens einer Zelle eines Akkumulators mit Elektrolytflüssigkeit im Innenraum eines Dichtbehälters, insbesondere ein Verfahren zum Befüllen mit einer Vorrichtung der eingangs genannten Art.

Akkumulatoren weisen als Grundeinheit eine galvanische Zelle auf, bestehend aus einem Elektrodensatz, welcher in einem Elektrolytflüssigkeitsbad angeordnet ist. Dabei kann ein Akkumulator, je nach Bauform und Anwendungszweck, mehrere derartiger Zellen aufweisen, die - wie etwa bei einem Akkumulator für ein Kraftfahrzeug - nebeneinander innerhalb eines Gehäuses angeordnet sind. Zum Befüllen der Zellen mit Elektrolytflüssigkeit ist es bei einer Reihe von Akkumulatoren notwendig, die Zelle vor dem Befüllen zu evakuieren, um einerseits die Bildung von Lufteinschlüssen bzw.- bläschen, insbesondere bei der Verwendung von gelförmigen Elektrolyten, zu vermeiden. Andererseits dient das Evakuieren der Zelle vor dem Befüllen zur Reduktion der Füllzeit, welche vor allem bei gelförmigen Elektrolyten aus technischen Gründen möglichst kurz sein sollte. Entsprechend sind aus dem Stand der Technik mehrere, verschiedene Füllvorrichtung und Füllverfahren der eingangs genannten Art bekannt.

So offenbart EP 1 142 042 B1 eine Vorrichtung zum Befüllen wenigstens einer Akkumulatorzelle, bei der der Akkumulator im Innenraum eines mit Hilfe einer Vakuumpumpe evakuierbaren Rezipienten aufgenommen wird. Weiterhin weist die Vorrichtung eine ebenfalls im Innenraum des Rezipienten aufgenommene Fülleinrichtung auf, welche zum Einbringen des Elektrolyten in eine Einfüllöffnung der Zelle dient. Dabei wird die Einrichtung über eine Zufuhrleitung mit Elektrolytflüssigkeit versorgt, welche vakuumdicht in den Rezipienten hineingeführt ist. Desweiteren weist die Zufuhrleitung einseitig jeweils einen Füllkopf mit einem Auslassstutzen auf, welcher in Füllposition mit Spiel in die Einfüllöffnung der Zelle eingreift bzw. eingeführt ist. Aufgrund des Spiels zwischen eingeführtem Auslassstutzen und Einfüllöffnung kann die Zelle vor dem Befüllen in einfacher Weise durch Evakuieren des gesamten Rezipienten mit evakuiert werden, um anschließend über die Fülleinrichtung mit Elektrolytflüssigkeit befüllt zu werden. Zwar können durch das Evakuieren der Zelle vor dem Befüllen mit einer derartigen Vorrichtung Lufteinschlüsse bzw. die Bildung von Luftbläschen im Elektrolyten vermieden werden. Jedoch sind die hierbei erreichbaren Füllzeiten oftmals noch unbefriedigend lang, insbesondere bei Einfüllen von gelförmigen Elektrolyten, welche aufgrund ihrer Viskosität sehr zähflüssig sind.

Ferner ist aus US 4,061,163 eine Füllvorrichtung mit einem evakuierbaren Rezipienten bekannt, in welchem eine oder mehrere Lithiumzellen zum Befüllen mit Elektrolytflüssigkeit angeordnet werden können. Dabei werden zunächst die Lithiumzellen mit ihrer einzigen Füllöffnung nach unten weisend auf einem Ständer innerhalb des Rezipienten positioniert. Anschließend wird der Rezipient evakuiert, um Wasser und Wasserdampf aus den Zellen zu entfernen. Sodann erfolgt eine leichte Erhöhung des Unterdrucks im Rezipienten, so dass er oberhalb des Siedepunktes des einzufüllenden Elektroyts liegt. Im Anschluss daran wird zunächst der Rezipient mit Elektrolytflüssigkeit gefüllt, wobei die Einlassöffnungen der Lithiumzellen in den Elektrolyt eintauchen. Nach dem Befüllen des Bodenbereichs des Rezipienten erfolgt eine weitere Erhöhung des Unterdrucks im Rezipienten, zunächst auf Atmosphärendruck und danach auf einen Druck oberhalb des Atmosphärendrucks, wodurch die Elektrolytflüssigkeit durch die Einlassöffnung in die Lithiumzelle eindringen kann. Nachteilig bei dieser Vorrichtung ist allerdings der Umstand, dass Teile der Zellenaußenseite bzw. der Akkumulatoraußenseite beim Eintauchen in das Elektrolytbad mit der chemisch aggressiven Elektrolytflüssigkeit in Kontakt kommen, so dass die Zelle bzw. der Akkumulator nach dem Befüllen mit hohem technischen wie zeitlichen Aufwand sorgfältig gereinigt werden muss.

Aufgabe der Erfindung ist es daher, eine Vorrichtung sowie ein Verfahren der eingangs genannten Art zum Befüllen einer Zelle eines Akkumulators mit Elektrolytflüssigkeit dahingehend zu verbessern, dass das Evakuieren und insbesondere das Befüllen der Zelle in möglichst kurzer Zeit und unter Vermeidung von Elektrolytkontamination der Außenseite des Akkumulator erfolgen kann. Gleichzeitig soll die Elektrolytflüssigkeit möglichst satt in den Elektrodensatz innerhalb der Zelle eindringen.

Diese Aufgabe wird erfindungsgemäß durch eine Vorrichtung nach Anspruch 1 sowie durch ein Verfahren nach Anspruch 10 gelöst. Vorteilhafte Ausgestaltungen der Erfindung sind Gegenstand der Unteransprüche.

Gemäß der Erfindung zeichnet sich die Vorrichtung, welche eine Fülleinrichtung, einen evakuierbarem Dichtbehälter zum Aufnehmen der Fülleinrichtung und des Akkumulators sowie eine durch die Behälterwandung geführte Zuführeinrichtung zur Versorgung der Fülleinrichtung mit Elektrolytflüssigkeit aufweist, dadurch aus, dass die Fülleinrichtung wenigstens einen mit Elektrolytflüssigkeit befüllbaren Zwischenbehälter aufweist, der im befüllten Zustand oberhalb des Elektrolytflüssigkeitsspiegels mit dem Innenraum des Dichtebehälters im Druckausgleich steht und der über wenigstens einen Auslass unterhalb des Elektrolytflüssigkeitsspiegels mit einer Füllöffnung der zu befüllenden Zelle unter druckdichtem Abschließen des Innenraums der Zelle gegenüber dem Innenraum des Dichtebehälters in Strömungsverbindung bringbar ist.

Durch einen derartigen Auslass, über welchen der Innenraum des Dichtbehälters mit dem Innenraum der zu befüllenden Zelle druckdicht gegenüber dem Innenraum des Dichtbehälters in Strömungsverbindung bringbar ist, wird in erfindungsgemäßer Weise erreicht, dass zwischen dem Innenraum der Zelle und dem Innenraum des Dichtbehälters, insbesondere dem Raum oberhalb des Elektrolytflüssigkeitsspiegels, eine Druckdifferenz aufgebaut werden kann, um die Elektrolytflüssigkeit mit Druck aus dem Zwischenbehälter in den Zelleninnenraum zu fördern.

Hierzu werden zunächst der Innenraum der zu befüllenden Zelle sowie der Innenraum des Rezipienten, vorzugsweise mit Hilfe einer Vakuumpumpe, evakuiert, wobei die Evakuierung der Zelle automatisch dadurch erfolgt, dass der Akkumulator mit geöffneten Füllöffnungen im Innenraum des vakuumdichten Dichtbehälters aufgenommen ist. Während der Evakuierung kann die ebenfalls im Dichtbehälter aufgenommene Fülleinrichtung über den wenigstens einen Auslass bereits druckdicht mit dem Innenraum der zu befüllenden Zelle in Strömungsverbindung stehen, da der Zwischenbehälter während des Evakuierens noch unbefüllt sein sollte. In diesem Fall wird der Innenraum der Zelle über den Auslass und den mit dem Innenraum des Dichtbehälters im Druckausgleich stehenden Zwischenbehälter entlüftet. Alternativ kann der Zwischenbehälter aber auch erst nach dem Abpumpen mit dem Innenraum der zu befüllenden Zelle druckdicht in Strömungsverbindung gebracht werden. Nach dem Evakuieren und In-Strömungsverbindung-Bringen erfolgt die Befüllung des Zwischenbehälters mit Elektrolytflüssigkeit, vorzugsweise über die Zufuhreinrichtung der Fülleinrichtung. Anschließend oder bereits während des Befüllens wird dann der Druck im Innenraum des Dichtbehälters erhöht, bspw. indem der Dichtbehälter langsam belüftet wird. Hierbei bildet die in den Zwischenbehälter eingebrachte Elektrolytflüssigkeit eine Druckbarriere, über die beim Druckerhöhen im Dichtbehälter eine Druckdifferenz zwischen dem Innenraum der zu befüllenden Zelle und dem Zwischenbehälterraum oberhalb des Elektrolytflüssigkeitsspiegel, welcher mit dem Innenraum des Dichtbehälter im Druckausgleich steht, aufgebaut werden kann.

In vorteilhafter Weise bewirkt diese Druckdifferenz, dass der Füllvorgang wesentlich schneller abläuft als beispielweise durch lediglich schwerkraftbedingtes Einfließen des Elektrolyts. Zudem wird durch das Ausüben eines Drucks auf den Elektrolytflüssigkeitsspiegel erreicht, dass das Elektrolyt besonders gut in den Elektrodensatz der zu befüllenden Zelle eindringen kann. Dies ist insbesondere dann von Bedeutung, wenn der Innenraum der Zelle - wie etwa bei modernen Kraftfahrzeugakkumulatoren - mit einem Vliesmaterial ausgestattet ist. In dieses sollte die Elektrolytflüssigkeit möglichst satt eindringen, bis es vollgesaugt ist und keine Lufteinschlüsse aufweist. Nur so kann eine einwandfreie Funktion des Akkumulators gewährleistet werden. Das satte Eindringen des Elektrolyts in den Zellinnenraum lässt sich noch dadurch beschleunigen bzw. verbessern, wenn der Druck im Innenraum des Rezipienten auf Atmosphärendruck und darüber hinaus auf Atmosphärenüberdruck erhöht wird. Denn je größer der Druckunterschied zwischen dem Innenraum der Zelle und dem Innenraum des Dichtbehälters ist, desto schneller läuft der Füllvorgang und desto größer ist die Menge der einbringbaren Elektrolytflüssigkeit.

Durch das druckdichte Abschließen des Innenraums der Zelle gegenüber dem Innenraum des Dichtbehälters mit Hilfe des Auslasses wird zudem erreicht, dass die Außenseite der Zelle bzw. des Akkumulators in keinster Weise mit Elektrolytflüssigkeit in Kontakt kommen kann. Eine aufwendige Reinigung der Außenseite des Akkumulators von anhaftendem Elektrolyt entfällt.

Gemäß einer ersten vorteilhaften Ausführungsform der Erfindung wird ein besonders sicheres Einfüllen des Elektrolyts in die Zelle dadurch erreicht, dass der wenigstens eine Auslass wenigstens einen Füllstutzen aufweist, der mit der Füllöffnung der zu befüllenden Zelle unter druckdichtem Abschließen des Innenraums der Zelle gegenüber dem Innenraum des Dichtbehälters in Strömungsverbindung bringbar ist. Insbesondere kann es vorgesehen sein, dass der wenigstens eine Füllstutzen in die Füllöffnung einführbar ist. Ein in die Füllöffnung hineinragender bzw. eingeführter Füllstutzen bewirkt, dass die Elektrolytflüssigkeit direkt in den Innenraum der zu befüllenden Zelle unterhalb der Füllöffnung gefördert wird. Hierdurch wird ein Auslaufen bzw. versehentliches Austreten von Elektrolytflüssigkeit über den Rand der Füllöffnung hinaus vermieden.

Zum druckdichten Abschließen des Innenraums der Zelle gegenüber dem Innenraum des Dichtbehälters weist der wenigstens eine Auslass oder der wenigstens eine Füllstutzen Dichtmittel auf. Dies kann beispielsweise ein Dichtring sein, der unterhalb des Auslasses des Zwischenbehälters angeordnet ist oder ein entsprechender Dichtring, der auf der Umfangsseite des Füllstutzens vorgesehen ist und entsprechend einen luftdichten bzw. druckdichten Abschluss zwischen Füllstutzen bzw. Auslass und der Füllöffnung der Zelle herstellt. Unter druckdichtem Abschließen wird in der vorliegenden Erfindung ein solcher Abschluss verstanden, der einer Druckdifferenz zwischen dem Innenraum der Zelle und dem Innenraum des Dichtbehälters standhält. Der Abschluss sollte einem Druckgradienten in beide Richtungen Stand halten, vorzugsweise mindestens jedoch einem Druckgefälle in Richtung Innenraum der Zelle d.h. einem Zustand, in dem der Druck im Innenraum des Dichtbehälters größer ist als im Innenraum der Zelle.

In vorteilhafter Weise sind die Dichtmittel derart ausgebildet, dass sie gegenüber der aggressiven Elektrolytflüssigkeit, insbesondere gegenüber Schwefelsäure, chemisch resistent sind. Vorzugsweise wird hierzu ein chemisch resistenter Kunststoff, insbesondere Gummi, als Material für das Dichtmittel gewählt, beispielsweise Ethylen-Propylen-Dien-Kautschuk oder ein Fluorelastomer-Material. Als Dichtmittel denkbar ist zum Beispiel ein O-Ring aus Ethylen-Propylen-Dien-Kautschuk, der auf der Umfangseite des Füllstutzens oder im Bereich des Auslasses angeordnet ist und einen etwaigen Spalt zwischen Füllöffnung und Auslass bzw. Füllstutzen druckdicht verschließt.

Nach einer weiteren vorteilhaften Ausgestaltung der Erfindung ist der wenigstens eine Zwischenbehälter als quaderförmiger, zylinderförmiger, kegelförmiger oder trichterförmiger Becher ausgebildet, der nach oben offen ist und in seinem Boden den wenigstens einen Auslass aufweist. Quader- oder zylinderförmige Becher lassen sich in technisch einfacher Weise, beispielsweise aus Blech oder Kunststoff herstellen. Kegelförmige oder trichterförmige Becher bieten zudem den Vorteil, dass die Elektrolytflüssigkeit aufgrund des Trichtereffekts möglichst vollständig über den Auslass in den Zellinnenraum einfließt, insbesondere dann, wenn der Auslass im Bereich der Verjüngung eines derart ausgebildeten Bechers angeordnet ist und der Becher mit der Verjüngung bzw. dem Auslass in Schwerkraftrichtung nach unten weisend in der Fülleinrichtung angeordnet ist. Ein nach oben offen ausgebildeter Zwischenbehälter ermöglicht in besonders einfacher Weise, dass der Raum des gefüllten Zwischenbehälters oberhalb des Elektrolytflüssigkeitsspiegels mit dem Innenraum des Dichtbehälters im Druckausgleich steht.

Da viele Akkumulatoren, insbesondere solche für den Kraftfahrzeugbereich, mehrere Zellen aufweisen, kann es nach einer weiteren vorteilhaften Ausgestaltungsform der Erfindung vorgesehen sein, dass die Fülleinrichtung mehrere Zwischenbehälter mit je wenigstens einem Auslass bzw. einem Auslass mit wenigstens einem Füllstutzen aufweist.

Insbesondere kann es weiterhin vorgesehen sein, dass die Anzahl und/oder die Anordnung aller Auslässe oder Füllstutzen der Fülleinrichtung mit der Anzahl und/oder der Anordnung der Füllöffnungen des Akkumulators korrespondieren. Auf diese Weise kann erreicht werden, dass sämtliche Zellen des Akkumulators gleichzeitig in einem Füllvorgang mit Hilfe der erfindungsgemäßen Vorrichtung befüllt werden können. Dabei kann entweder ein Zwischenbehälter vorgesehen sein, von dem eine der Anzahl der Zellen des Akkumulators korrespondierende Anzahl an Auslässen und/oder Füllstutzen abgehen. Alternativ kann es vorgesehen sein, dass entsprechend der Anzahl und Anordnung der Füllöffnung des Akkumulators eine gleichgroße Anzahl von Zwischenbehältern mit Auslässen und Füllstutzen vorgesehen ist, wobei die Anordnung der Auslässe bzw. der Füllstutzen vorzugsweise mit der Anordnung. Füllöffnungen des Akkumulators korrespondiert. Eine korrespondierende Anordnung der Füllstutzen bzw. Auslässe erlaubt ein besonders einfaches In-Strömungsverbindung-Bringen der Auslässe bzw. Füllstutzen mit den Füllöffnungen des Akkumulators. Vorzugsweise wird die Fülleinrichtung einfach von oben auf die geöffneten Fülleinrichtungen aufgesetzt bzw. eingeführt. Diese kann entweder von Hand oder automatisch erfolgen.

Nach einer weiteren vorteilhaften Ausgestaltungsform der Erfindung weist der evakuierbare Dichtbehälter eine Bodenplatte und ein darauf druckdicht schließendes, abnehmbares, vorzugsweise haubenförmiges, Oberteil auf. Vorzugsweise ist das abnehmbare Oberteil mittels einer Hubvorrichtung über den Akkumulator und/oder die Fülleinrichtung senkbar bzw. stülpbar.

Zum Einbringen eines Akkumulators in die Füllvorrichtung wird das Oberteil des Dichtbehälters, vorzugsweise mit Hilfe der Hubvorrichtung, nach oben angehoben bzw. abgehoben, und nach dem Einbringen des Akkumulators wieder auf die Bodenplatte abgesenkt, wobei Oberteil und Bodenplatte druckdicht aufeinander abschließen. Der druckdichte Abschluss kann beispielsweise mit Dichtmittel, insbesondere Gummidichtungen, auf der Unterseite des Oberteils, welche mit der Bodenplatte in Kontakt kommt, realisiert werden.

Von Vorteil weist der Dichtbehälter nach einer weiteren Ausgestaltungsform der Erfindung eine dem Akkumulator im Wesentlichen angepasste Form auf. Von Vorteil ist er als quaderförmiges Gehäuse, bestehend aus einem haubenförmigen Oberteil und einer ebenen Bodenplatte, ausgebildet, welches nur geringfügig größer als der Akkumulator selbst ist, jedoch noch ausreichend Platz für die Aufnahme der Fülleinrichtung aufweist. Durch ein möglichst kleines Innenvolumen des Dichtbehälters wird erreicht, dass der Innenraum des Dichtbehälters sehr schnell abgepumpt werden kann, wodurch sich die Zeitdauer eines Füllvorgangs reduzieren lässt. Weiterhin wirkt der Dichtbehälter als Spritzschutz für den Bediener der Füllvorrichtung, da der Akkumulator während des Füllvorgangs hermetisch durch den Dichtbehälter umfasst ist.

Nach einer weiteren vorteilhaften Ausgestaltung der Erfindung sind zumindest Teile der Fülleinrichtung, insbesondere der wenigstens eine Füllstutzen und/oder der wenigstens eine Zwischenbehälter, an dem Oberteil des Dichtbehälters gehalten. Hierdurch wird insbesondere erreicht, dass beim Anheben des Oberteils automatisch die Fülleinrichtung mit nach oben angehoben wird, so dass der Akkumulator problemlos nach dem Befüllen direkt der gesamten Vorrichtung zum Befüllen entnommen werden kann, ohne dass in einem zusätzlichen Arbeitsschritt die Fülleinrichtung vom befüllten Akkumulator getrennt werden muss. Umgekehrt wird die Fülleinrichtung hierdurch beim Absenken des Oberteils automatisch in den Füllöffnungen des zu befüllenden Akkumulators eingeführt.

Gemäß der Erfindung ist die Fülleinrichtung oder zumindest Teile davon federelastisch am Oberteil des Dichtbehälters gehalten, beispielsweise mittels federbelasteten Haltestangen oder einer federbelasteten Aufhängung, die beim Aufsetzen des Fülleinrichtung auf den Akkumulator nachgibt, sofern das Oberteil beim Absenken noch nicht seine Endschließposition auf der Bodenplatte erreicht hat. Durch eine derartige federelastische Befestigung von zumindest Teilen der Fülleinrichtung am Oberteil des Dichtbehälters können Höhenunterschiede ausgeglichen werden, die sich aufgrund von Toleranzen bei den Abmessungen des Akkumulators ergeben.

Zum vereinfachten positionsgenauen, insbesondere automatischen In-Strömungsverbindung-Bringen des oder der Aufsätze bzw. Füllstutzen mit der oder den Füllöffnungen des Akkumulators weist die Fülleinrichtung gemäß der Erfindung mechanische Führungsmittel, insbesondere Justierbolzen, auf. Hierdurch wird erreicht, dass der Akkumulator beim Aufsetzen der Fülleinrichtung beim Absenken des Oberteils mit daran gehaltener Fülleinrichtung automatisch in die richtige Position relativ zur Fülleinrichtung geschoben wird, so dass die Auslässe bzw. Füllstutzen automatisch die Füllöffnungen des Akkumulators eingreifen bzw. mit diesen in Strömungsverbindung gebracht werden.

Nach einer weiteren vorteilhaften Ausgestaltung der Erfindung weist die Vorrichtung eine Vakuumeinrichtung zum Anpumpen des Innenraums des Dichtbehälters und/oder eine Druckquelle zum Erzeugen von Atmosphärendruck oder Atmosphärenüberdruck im Innenraum des Dichtbehälters auf. Besonders bevorzugt dienen hierzu Vakuumpumpen bzw. Druckpumpen.

Zum Kontrollieren und Beeinflussen des Füllvorgangs kann es nach einer weiteren vorteilhaften Ausgestaltung der Erfindung vorgesehen sein, dass der Druck im Innenraum des Dichtbehälters mittels Druckquelle oder Vakuumeinrichtung steuerbar und/oder regelbar ist. Insbesondere kann es vorgesehen sein, dass der Druck im Innenraum des Dichtbehälters im Bereich von 10 mbar bis 2500 mbar, vorzugsweise im Bereich von 100 mbar bis Atmosphärendruck, steuerbar und/oder regelbar ist. Auf diese Weise können u.a. benutzerdefiniert Druckprofile beim Befüllen des Akkumulators gefahren werden.

Ein erster unabhängiger Gedanke der Erfindung betrifft eine Fülleinrichtung der zuvor beschriebenen Art, welche zur Anordnung in einem Dichtbehälter bzw. einer erfindungsgemäßen Vorrichtung zum Befüllen wenigstens einer Zelle eines Akkumulators mit Elektrolytflüssigkeit geeignet ist. Insbesondere ist denkbar, dass die Fülleinrichtung eine eigenständige Einheit bildet, die insbesondere als Nachrüstsatz oder Ersatzteil in bestehende Vorrichtungen zum Befüllen integriert werden kann.

Ein weiterer unabhängiger Gedanke der Erfindung betrifft ein Verfahren zum Befüllen wenigstens einer Zelle eines Akkumulators mit Elektrolytflüssigkeit im Innenraum eines Dichtbehälters, insbesondere ein Verfahren mit einer zuvor beschriebenen Vorrichtung zum Befüllen eines Akkumulators. Gemäß der Erfindung ist das Füllverfahren durch folgende Schritte gekennzeichnet:
a. Evakuieren des Zellinnenraums über eine Füllöffnung der zu befüllenden Zelle durch Erzeugen eines Unterdrucks im Innenraum des Dichtbehälters;
b. Befüllen wenigstens eines im Innenraum des Dichtbehälters angeordneten Zwischenbehälters mit Elektrolytflüssigkeit, so dass der Zwischenbehälter oberhalb des Elektrolytflüssigkeitsspiegels im Druckausgleich mit dem Innenraum des Dichtbehälters steht;
c. Erhöhen des Drucks im Innenraum des Dichtbehälters, so dass aufgrund der Druckdifferenz zwischen Innenraum des Dichtbehälters und Innenraum der Zelle Elektrolytflüssigkeit aus dem Zwischenbehälter über wenigstens einen Auslass in die Zelle gefördert wird, wobei der Zwischenbehälter vor dem Befüllen über den Auslass unter druckdichtem Abschließen des Innenraums der Zelle gegenüber dem Innenraum des Dichtbehälters mit der Füllöffnung der Zelle in Strömungsverbindung gebracht wird.

Gemäß der Erfindung wird durch die Erzeugung eines derartigen Druckunterschieds zwischen dem Innenraum des Dichtbehälters und dem Innenraum der Zelle erreicht, dass auf dem Elektrolytflüssigkeitsspiegel ein Druck ausgeübt wird, der das Eindringen der Elektrolytflüssigkeit in den Elektrodensatz innerhalb der Zelle deutlich verbessert und beschleunigt.
Außerdem wird durch das druckdichte Abschließen des Innenraums der Zelle gegenüber dem Innenraum des Dichtbehälters mit Hilfe des Auslasses erreicht, dass die Außenseite der Zelle bzw. des Akkumulators in keinster Weise mit Elektrolytflüssigkeit in Kontakt kommen kann. Eine aufwendige Reinigung der Außenseite des Akkumulators von anhaftendem Elektrolyt entfällt auf diese Weise.

Dieser Prozess kann nach einer ersten vorteilhaften Ausgestaltung des Verfahrens dadurch gesteigert werden, dass der Druck im Innenraum des Dichtbehälters auf Atmosphärendruck oder sogar auf Atmosphärenüberdruck erhöht wird.

Denkbar ist es auch, dass der Druck im Innenraum des Dichtbehälters nach einer weiteren vorteilhaften Ausgestaltung der Erfindung stufenweise, insbesondere zunächst auf Atmosphärendruck und anschließend auf Atmosphärenüberdruck, erhöht wird.

Weiterhin kann es in vorteilhafter Weise vorgesehen sein, dass der Druck im Innenraum des Dichtbehälters beim Erhöhen zwischen zwei Werten, insbesondere zwischen Atmosphärendruck und Atmosphärenüberdruck, variiert, insbesondere pulsierend variiert wird.

Zur weiteren Effizienzsteigerung kann es außerdem vorgesehen sein, dass die zuvor beschriebenen Verfahrensschritte mehrfach wiederholt werden, um möglichst viel Elektrolytflüssigkeit in den Innenraum der Zelle zu fördern.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Fig. 1: ein mögliches Ausführungsbeispiel einer erfindungsgemäßen Vorrichtung zum Befüllen wenigstens einer Zelle eines Akkumulators, in Explosionsdarstellung, ohne Bodenplatte;
- Fig. 2: Schnitt durch die Vorrichtung gemäß Figur 1, mit Bodenplatte;
- Fig. 3: ein weiterer Schnitt durch die Vorrichtung gemäß Figur 1, ohne Bodenplatte; und
- Fig. 4: Schnitt durch die Vorrichtung gemäß Figur 3 entlang der Schnittlinie G-G, ohne Bodenplatte.

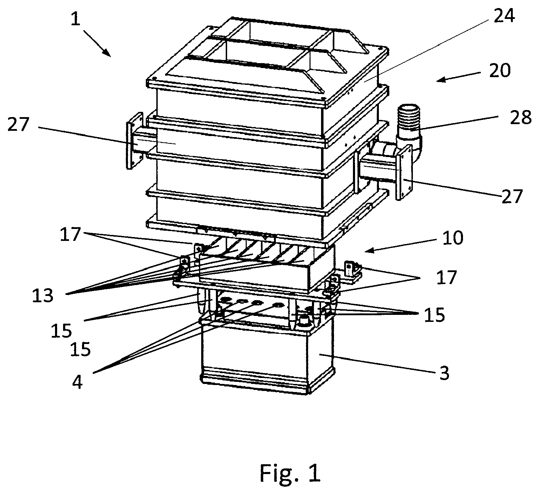

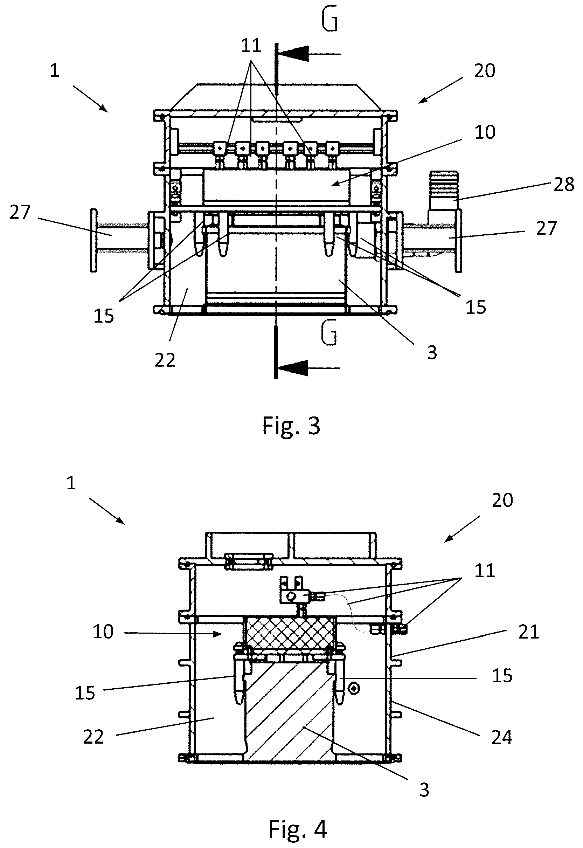

- Die Fig. 1 bis 4: zeigen ein mögliches Ausführungsbeispiel einer erfindungsgemäßen Vorrichtung 1 zum Befüllen wenigstens einer Zelle 2 eines

Akkumulators 3 mit Elektrolytflüssigkeit 30. Die Vorrichtung 1 weist eine Füllvorrichtung 10, einen Dichtbehälter 20 zum Aufnehmen der Fülleinrichtung 10 und des Akkumulators 3 sowie eine durch die Behälterwandung 21 geführte Zuführeinrichtung 11 zur Versorgung der Fülleinrichtung 10 mit Elektrolytflüssigkeit 30 auf. Im hier gezeigten Ausführungsbeispiel besteht der im Wesentlichen quaderförmige Dichtbehälter 20 aus einer ebenen Bodenplatte 23 und einem haubenförmigen Oberteil 24. Das Oberteil 24 kann von der Bodenplatte 23 mittels einer - hier nicht dargestellten - Hubvorrichtung abgenommen wird, d. h. nach oben angehoben bzw. nach unten abgesenkt werden. Hierzu ist das Oberteil 24 über die Befestigungsarme 27 mit der - hier nicht dargestellten - Hubvorrichtung verbunden.

Desweiteren ist das abnehmbare Oberteil 24 derart ausgebildet, dass es beim Absetzen auf der Bodenplatte 23 auf dieser druckdicht aufschließt, so dass zwischen dem Innenraum 22 des Dichtbehälters 20 und seiner Umgebung eine Druckdifferenz gehalten werden kann. Zur Abdichtung des Oberteils 24 auf der Bodenplatte 23 weist das Oberteil 24 an seiner mit der Bodenplatte 23 in Kontakt stehenden Unterseite ein Bodendichtelement 29, insbesondere eine umlaufende Gummidichtung auf. Dies ermöglicht, den Dichtbehälter 20 gemäß der Erfindung zu evakuieren, d. h. in dessen Innenraum 22 ein Vakuum zu erzeugen. Zum Abpumpen des Dichtbehälters 20, d.h. zur Vakuumerzeugung, dient vorzugsweise eine - hier ebenfalls nicht dargestellte - Vakuumeinrichtung, insbesondere eine Vakuumpumpe, welche über einen Pumpanschluss 28 am Dichtbehälter 20 mit dem Innenraum 22 des Dichtbehälters 20 verbunden werden kann. Gemäß den Fig. 1 bis 3 ist der Pumpenanschluss 28 im vorliegenden Ausführungsbeispiel als abgewinkeltes Rohrstück mit Anschlussgewinde ausgebildet und seitlich am Oberteil 24 des Dichtebehälters 20 angeordnet.

Ferner weist der Dichtbehälter 20 im vorliegenden Ausführungsbeispiel eine dem Akkumulator 3 im Wesentlichen angepasste Form auf. Bodenplatte 23 und Oberteil 24 bilden ein quaderförmiges Gehäuse, welches nur geringfügig größer ist als der Akkumulator 3 selbst, jedoch noch so viel Raum lässt, um ebenfalls die Fülleinrichtung 10 aufzunehmen.

Gemäß der Erfindung weist die Füllvorrichtung 10 wenigstens einen Zwischenbehälter 13 auf. Im vorliegenden Ausführungsbeispiel weist die Fülleinrichtung 10 entsprechend der Anzahl der Zellen 2 des Akkumulators 3 insgesamt 6 Zwischenbehälter 13 auf. Diese sind über die Zuführeinrichtung 11 der Fülleinrichtung 10 mit Elektrolytflüssigkeit 30 jeweils separat befüllbar. Vorzugsweise ist das Fassungsvermögen jedes Dichtbehälters 13 derart gewählt, dass darin wenigstens soviel Elektrolytflüssigkeit 30 aufgenommen werden kann, wie zur ordnungsgemäßen Befüllung der zugeordneten Zelle 2 benötigt wird. Denkbar ist insbesondere, dass über die Zuführeinrichtung 11 die einzubringende Elektrolytmenge für jeden Zwischenbehälter 13 dosiert wird.

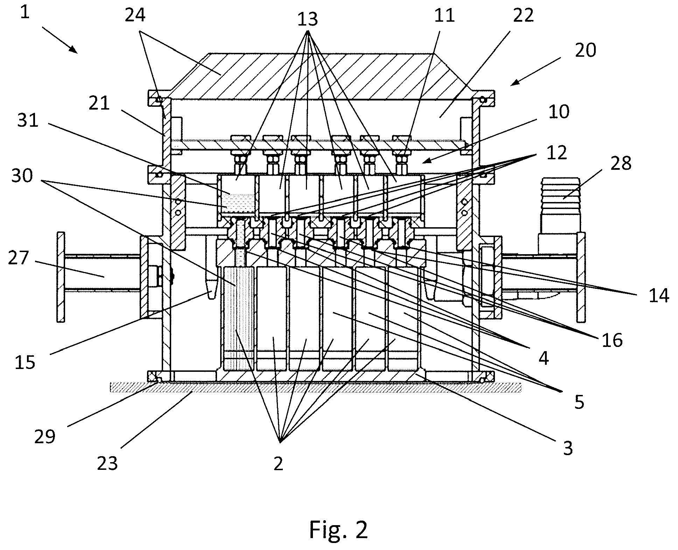

Jeder der Zwischenbehälter 13 ist derart ausgebildet, dass er im befüllten Zustand oberhalb des Elektrolytflüssigkeitsspiegels 31 mit dem Innenraum 22 des Dichtbehälters 20 im Druckausgleich steht und über wenigstens einen Auslass 12 unterhalb des Elektrolytflüssigkeitsspiegels 31 mit einer Füllöffnung 4 der zu befüllenden Zelle 2 unter druckdichtem Abschließen des Innenraums 5 der Zelle 2 gegenüber dem Innenraum 22 des Dichtbehälters 20 in Strömungsverbindung bringbar ist. Fig. 2 zeigt die Fülleinrichtung 10 in Füllposition, d.h. in einer Position, in der jeder Zwischenbehälter 13 über seinen Auslass 4 unter druckdichten Abschließen des Innenraums 5 der Zelle 2 gegenüber dem Innenraum 22 des Dichtbehälters 20 mit einem zugeordnetem Zelleninnenraum 5 in Strömungsverbindung steht. Auf diese Weise kann zwischen dem Innenraum 5, der Zelle 2 und dem Innenraum 22 des Dichtbehälters 20 eine Druckdifferenz aufgebaut werden, wenn der Zwischenbehälter 13 mit Elektrolytflüssigkeit 30 befüllt ist.

In dem hier gezeigten Ausführungsbeispiel der erfindungsgemäßen Vorrichtung 1 weist jeder Auslass 12 eines jeden Zwischenbehälters 13 einen Füllstutzen 16 auf, der unter druckdichtem Abschließen des Innenraums 5 der Zelle 2 gegenüber dem Innenraum 22 des Sichtbehälters 20 in die Füllöffnung 4 einführbar ist bzw. eingeführt ist.

Zum druckdichten Abschließen weist der Füllstutzen 16 hierzu ein Dichtmittel 14, insbesondere einen am Füllstutzen 16 umfangseitig angeordneten Dichtring auf. Dieser verschließt den Spalt zwischen Füllöffnung 4 und den darin mit Spiel eingreifenden Füllstutzen 16. Vorzugsweise besteht der Dichtring aus einem gegenüber der aggressiven Elektrolytflüssigkeit 30, insbesondere gegenüber Schwefelsäure, chemisch resistenten Material, beispielsweise aus Ethylen-Propylen-Dien-Kautschuk oder aus einem Fluorelastomer-Material.

Die Anordnung der Auslässe 12 bzw. der sich daran anschließenden Füllstutzen 16 der Fülleinrichtung 10 korrespondierenden mit der Anordnung der Füllöffnung 4 des Akkumulators 3, so dass die Füllstutzen 16 beim Aufsetzen der Fülleinrichtung 10 auf den Akkumulator 3 automatisch in die Füllöffnungen 4 des Akkumulators 3 eingreifen.

Zum Ausrichten des Akkumulators 3 beim Aufsetzen der Fülleinrichtung 10 bzw. beim Einführen der Füllstutzen 13 in die Füllöffnungen 4 weist die Fülleinrichtung 10 mechanische Führungsmittel 15, insbesondere Justierbolzen auf, welche den Akkumulator 3 bei Aufsetzen der Fülleinrichtung 10 automatisch in die richtige Position schieben.

Das Aufsetzen der Fülleinrichtung 10 kann entweder manuell oder automatisch erfolgen. In dem hier gezeigten Ausführungsbeispiel ist die Fülleinrichtung 10, insbesondere die Zwischenbehälter 13 mit den Füllstutzen 16, am Oberteil 24 des Dichtbehälters 20 über eine Halteeinrichtung 17 gehalten, so dass die Fülleinrichtung 10 beim Heben und Senken des Oberteils 24 automatisch mit verfährt. Auf diese Weise wird in vorteilhafter Weise erreicht, dass beim Bestücken der Füllvorrichtung 1 mit einem neuen Akkumulator 3 bzw. beim Herausnehmen eines befüllten Akkumulators 3 die Fülleinrichtung 10 automatisch beim Öffnen bzw. beim Schließen des Dichtbehälters 20 vom Akkumulator 3 abgehoben bzw. auf diesen aufgesetzt wird.

Um etwaige Toleranzen in den Abmessungen des Akkumulators 3 auszugleichen, ist die Fülleinrichtung 10 federelastisch, vorliegend mittels federbelasteten Haltebolzen der Halteeinrichtung 17, an dem Oberteil 24 des Dichtbehälters 20 gehalten.

Zum Befüllen eines Akkumulators 3 mit Elektrolytflüssigkeit 30 wird das Oberteil 24 zusammen mit der Fülleinrichtung 10 unter Zuhilfenahme der - hier nicht gezeigten Hubeinrichtung - von der Bodenplatte 23 nach oben abgehoben. Sodann wird der zu befüllende Akkumulator 3 auf der Bodenplatte 23 des Dichtbehälters 20 positioniert und anschließend das Oberteil 24 mit der Fülleinrichtung 10 in einer Vertikalbewegung nach unten gesenkt, wobei nach einer bestimmten Verfahrstrecke die Positionierbolzen als Führungsmittel 15 mit dem Gehäuse des Akkumulators 3 in Eingriff gelangen und diesen in die gewünschte Position verschieben, so dass die Füllstutzen 16 der Fülleinrichtung 10 automatisch in die geöffneten Füllöffnungen 4 des Akkumulators 3 eingreifen. Etwaige Höhenunterschiede aufgrund Toleranzen in den Abmessungen des Akkumulators 3 werden durch die gefederte Halterung der Fülleinrichtung 10 im Oberteil 24 des Dichtbehälters 20 ausgeglichen.

Vor dem eigentlichen Befüllen wird zunächst der Innenraum 22 des Dichtbehälters 20 mit Hilfe der - hier nicht dargestellten - Vakuumeinrichtung über den Pumpanschluss 28 evakuiert. Da sich zu diesem Zeitpunkt noch keine Elektrolytflüssigkeit 30 in den Zwischenbehältern 13 befindet, steht der Innenraum 5 der Zellen 2 mit dem Innenraum 22 des Dichtbehälters 20 in Strömungsverbindung, so dass auch der Innenraum 5 der Zellen 2 mit evakuiert wird. Nach Erreichen eines gewünschten Unterdrucks im Innenraum der Zellen bzw. des Dichtbehälters 20 wird sodann Elektrolytflüssigkeit 30 über die Zuführeinrichtung 11 in die Zwischenbehälter 13 eingefüllt. Hierzu ist die Zuführeinrichtung 11 durch die Behälterwandung 21 druckdicht hindurch geführt. Das Befüllen der Zwischenbehälter 13 mit Elektrolytflüssigkeit 30 erfolgt derart, dass jeder Zwischenbehälter 13 nach dem Befüllen oberhalb des Elektrolytflüssigkeitsspiegels 31 mit dem Innenraum des Dichtbehälters 20 im Druckausgleich steht. Über die Auslässe 12 unterhalb des Elektrolytflüssigkeitsspiegels 31 kann sodann Elektrolytflüssigkeit 30 über die Füllstutzen 16 in die Zellen 2 des Akkumulators 3 fließen. Zur Verbesserung und Beschleunigung des Füllvorgangs wird nach oder bereits während des Befüllens der Zwischenbehälter 13 der Druck im Innenraum 22 des Dichtbehälters 20 erhöht. Da der Auslass 12 bzw. Füllstutzen 16 druckdicht auf den Öffnungen 4 der Zellen 2 des Akkumulators 3 aufsitzen, kann sich einen Druckdifferenz zwischen dem Innenraum 5 der Zellen 2 und dem Innenraum 22 des Dichtbehälters 20 ausbilden.

Insgesamt wird hierdurch erreicht, dass auf den Elektrolytflüssigkeitsspiegel 31 ein Druck ausgeübt wird, der das Eindringen der Elektrolytflüssigkeit 30 in den Elektrodensatz 6 des Zellen 2 beschleunigt und verbessert, insbesondere derart verbessert, dass sich der Elektrodensatz möglichst satt mit Elektrolytflüssigkeit füllt und keine Lufteinschlüsse aufweist. Vorzugsweise wird der Druck hierzu auf Atmosphärendruck erhöht, in dem beispielsweise die Vakuumpumpe abgeschaltet und der Innenraum 22 des Dichtbehälters 20 belüftet wird.

Zur weiteren Beschleunigung bzw. Verbesserung des Füllvorgangs kann der Druck im Innenraum 22 des Dichtbehälters 20 zusätzlich auch auf Atmosphärenüberdruck erhöht werden. Insbesondere kann der Druck im Innenraum 22 des Dichtbehälters 20 stufenweise, vorzugsweise zunächst auf Atmosphärendruck und anschließend auf Atmosphärenüberdruck, erhöht werden.

Denkbar ist auch, dass der Druck im Innenraum 22 des Dichtbehälters 20 beim Erhöhen zwischen zwei Werten, insbesondere zwischen Atmosphärenüberdruck variiert wird, insbesondere pulsierend variiert, wird.

Auch ist denkbar, dass zur Effizienzsteigerung die Verfahrensschritte Evakuieren, Befüllen des Zwischenbehälters 13 und Druckerhöhen mehrfach wiederholt werden.

Zur Druckerhöhung auf Atmosphärenüberdruck weist die Vorrichtung in vorteilhafter Weise eine hier nicht dargestellte Druckquelle, insbesondere eine Druckpumpe auf.

Nach einer vorteilhaften Ausführungsform der Erfindung ist der Druck im Innenraum 22 des Dichtbehälters 20 mittels der Druckquelle und/oder der Vakuumeinrichtung steuerbar und/oder regelbar. Vorzugsweise erfolgt die Steuerung bzw. Regelung im Bereich von 10 mbar bis 2500 mbar, insbesondere im Bereich von 100 mbar bis Atmosphärendruck.

Nach Beendigung des Füllvorgangs wird der Dichtbehälter 20 belüftet und das Oberteil 24 mittels der Hubeinrichtung von der Bodenplatte 23 abgehoben, wobei die Fülleinrichtung 10, insbesondere die Einfüllstutzen 16 selbsttätig aus den Einfüllöffnungen 4 entfernt werden.

### Bezugszeichenliste

- 1: Vorrichtung zum Befüllen

- 2: Zelle des Akkumulators
- 3: Akkumulator
- 4: Füllöffnung
- 5: Innenraum der Zelle
- 6: Elektrodensatz

- 10: Fülleinrichtung
- 11: Zuführeinrichtung
- 12: Auslass
- 13: Zwischenbehälter
- 14: Dichtmittel
- 15: Führungsmittel
- 16: Füllstutzen
- 17: Halteeinrichtung

- 20: Dichtbehälter
- 21: Behälterwandung
- 22: Innenraum des Dichtbehälters
- 23: Bodenplatte
- 24: Oberteil
- 27: Befestigungsarme
- 28: Pumpenanschluss
- 29: Bodendichtelemente

- 30: Elektrolytflüssigkeit
- 31: Elektrolytflüssigkeitsspiegel

## Patentansprüche

1. Vorrichtung (1) zum Befüllen wenigstens einer Zelle (2) eines Akkumulators (3) mit Elektrolytflüssigkeit (30), mit einer Fülleinrichtung (10), mit einem evakuierbaren Dichtbehälter (20) zum Aufnehmen der Fülleinrichtung (10) und des Akkumulators (3), sowie mit einer durch die Behälterwandung (21) geführten Zuführeinrichtung (11) zur Versorgung der Fülleinrichtung (10) mit Elektrolytflüssigkeit (30), **dadurch gekennzeichnet, dass** die Fülleinrichtung (10) wenigstens einen mit Elektrolytflüssigkeit (30) befüllbaren Zwischenbehälter (13) aufweist, der im befüllten Zustand oberhalb des Elektrolytflüssigkeitsspiegels (31) mit dem Innenraum des Dichtebehälters (20) im Druckausgleich steht und der über wenigstens einen Auslass (12) unterhalb des Elektrolytflüssigkeitsspiegels (31) mit einer Füllöffnung (4) der zu befüllende Zelle (2) unter druckdichtem Abschließen des Innenraums (5) der Zelle (2) gegenüber dem Innenraum (22) des Dichtebehälters (20) in Strömungsverbindung bringbar ist, wobei zumindest Teile der Fülleinrichtung (10), insbesondere der wenigstens eine Füllstutzen (16) und/oder der wenigstens eine Zwischenbehälter (13), an dem Oberteil (24) des Dichtbehälters (20) federelastisch gehalten sind und wobei die Fülleinrichtung (10) zum positionsgenauen In-Strömungsverbindung-Bringen des oder der Auslässe bzw. Füllstutzen mit der oder den Füllöffnung(en) (4) des Akkumulators (3) mechanische Führungsmittel (15), insbesondere Justierbolzen, aufweist.

2. Vorrichtung nach Anspruch 1, **dadurch gekennzeichnet, dass** der wenigstens eine Auslass (12) wenigstens einen Füllstutzen (16) aufweist, der mit der Füllöffnung (4) der zu befüllenden Zelle (2) unter druckdichtem Abschließen des Innenraums (5) der Zelle (2) gegenüber dem Innenraum (22) des Dichtebehälters (20) in Strömungsverbindung bringbar ist, insbesondere in die Füllöffnung (4) einführbar ist.

3. Vorrichtung nach Anspruch 1 oder 2, **dadurch gekennzeichnet, dass** der wenigstens eine Auslass (12) oder der wenigstens eine Füllstutzen (16) Dichtmittel (14), insbesondere einen Dichtring, zum druckdichten Abschließen des Innenraums (5) der Zelle (2) gegenüber dem Innenraum (22) des Dichtebehälters (20) aufweist.

4. Vorrichtung nach einem der vorhergehenden Ansprüche, **dadurch gekennzeichnet, dass** der wenigstens eine Zwischenbehälter (13) als quaderförmiger, zylinderförmiger, kegelförmiger oder trichterförmiger Becher ausgebildet ist, der nach oben offen ist und in seinem Boden (14) den wenigstens einen Auslass (12) aufweist.

5. Vorrichtung nach einem der vorhergehenden Ansprüche, **dadurch gekennzeichnet, dass** mehrere Zwischenbehälter (13) mit je wenigstem einem Auslass (12) bzw. Auslass (12) mit Füllstutzen (16) vorgesehen sind.

6. Vorrichtung nach einem der vorhergehenden Ansprüche, **dadurch gekennzeichnet, dass** die Anzahl und/oder die Anordnung aller Auslässe (12) oder Füllstutzen (16) der Fülleinrichtung (10) mit der Anzahl und/oder der Anordnung der Füllöffnungen (4) des Akkumulators (3) korrespondieren.

7. Vorrichtung nach einem der vorhergehenden Ansprüche, **dadurch gekennzeichnet, dass** zum Vakuumerzeugen im Innenraum (22) des Dichtbehälters (20) eine Vakuumeinrichtung, insbesondere eine Vakuumpumpe, und/oder zum Erzeugen von Atmosphärenüberdruck im Innenraum (22) des Dichtbehälters (20) eine Druckquelle, insbesondere eine Druckpumpe, vorgesehen ist.

8. Vorrichtung nach einem der vorhergehenden Ansprüche, **dadurch gekennzeichnet, dass** der Druck im Innenraum (22) des Dichtbehälters (20) mittels Druckquelle und/oder Vakuumeinrichtung steuerbar und/oder regelbar ist, insbesondere im Bereich von 10mbar bis 2500 mbar, vorzugsweise im Bereich von 100 mbar bis Atmosphärendruck.

9. Vorrichtung nach einem der vorhergehenden Ansprüche, **dadurch gekennzeichnet, dass** der Dichtbehälter (20) eine Bodenplatte (23) und ein darauf druckdicht schließendes, abnehmbares Oberteil (24) aufweist, welches vorzugsweise mittels einer Hubvorrichtung über den Akkumulator (3) und/oder die Fülleinrichtung (10) senkbar bzw. stülpbar ist.

10. Verfahren zum Befüllen wenigstens einer Zelle (2) eines Akkumulators (4) mit Elektrolytflüssigkeit (30) im Innenraum (22) eines Dichtbehälters (20), mit einer Vorrichtung (1) nach einem der vorhergehenden Ansprüche, **gekennzeichnet durch** folgende Schritte:
a. Evakuieren des Zelleninnenraums (5) über eine Füllöffnung (4) der zu befüllende Zelle (3) **durch** Erzeugung eines Unterdrucks im Innenraum (22) des Dichtebehälters (20);
b. Befüllen wenigstens eines im Innenraum (22) des Dichtebehälters (20) angeordneten Zwischenbehälters (13) mit Elektrolytflüssigkeit (30), so dass der Zwischenbehälter (13) oberhalb des Elektrolytflüssigkeitsspiegels (31) im Druckausgleich mit dem Innenraum (22) des Dichtbehälters (20) steht;
c. Erhöhen des Drucks im Innenraum (22) des Dichtebehälters (20), so dass aufgrund der Druckdifferenz zwischen Innenraum (22) des Dichtebehälters (20) und Innenraum (5) der Zelle (2) Elektrolytflüssigkeit (30) aus dem Zwischenbehälter (13) über wenigstens einen Auslass (12) in die Zelle (2) gefördert wird, wobei der Zwischenbehälter (13) vor dem Befüllen über den Auslass (12) unter druckdichtem Abschließen des Innenraums (5) der Zelle (2) gegenüber dem Innenraum (22) des Dichtebehälters (20) mit der Füllöffnung (4) der Zelle (2) in Strömungsverbindung gebracht wird.

11. Verfahren nach Anspruch 10, **dadurch gekennzeichnet, dass** der Druck im Innenraum (22) des Dichtebehälters (20) auf Atmosphärendruck oder Atmosphärenüberdruck erhöht wird.

12. Verfahren nach Anspruch 10 oder 11, **dadurch gekennzeichnet, dass** der Druck im Innenraum (22) des Dichtebehälters (20) stufenweise, insbesondere zunächst auf Atmosphärendruck und anschließend auf Atmosphärenüberdruck, erhöht wird.

13. Verfahren nach Anspruch 10 oder 11, **dadurch gekennzeichnet, dass** der Druck im Innenraum (22) des Dichtebehälters (20) beim Erhöhen zwischen zwei Werten, insbesondere zwischen Atmosphärendruck und Atmosphärenüberdruck, variiert wird.

14. Verfahren nach einem der Ansprüche 10 bis 13, **dadurch gekennzeichnet, dass** die Verfahrensschritte mehrfach wiederholt werden.

## Claims

1. Device (1) for filling at least one cell (2) of an accumulator (3) with electrolyte fluid (30), comprising a filling appliance (10), an evacuable sealing container (20) for receiving the filling appliance (10) and the accumulator (3), as well as a feeder device (11) that is guided through the container wall (21) for supplying the filling appliance (10) with electrolyte fluid (30), **characterized in that** the filling appliance (10) has at least one intermediate container (13) which can be filled with electrolyte fluid (30) and which in the filled state is in pressure compensation with the internal space of the sealing container (20) above the electrolyte fluid level (31), and which can be brought into a flow connection with a filling opening (4) of the cell to be filled (2) via at least one outlet (12) below the electrolyte fluid level (31), with the internal space (5) of the cell (2) being closed in a pressure-tight manner against the internal space (22) of the sealing container (20), wherein at least parts of the filling appliance (10), in particular the at least one filling spout (16) and/or the at least one intermediate container (13), are held in a spring-elastic manner at the top part (24) of the sealing container (20), and wherein the filling appliance (10) comprises mechanical guide means (15), in particular adjusting bolts, for bringing the one or multiple outlets or filling spouts into a flow connection with the one or multiple filling opening(s) (4) of the accumulator (3) in a precisely positioned manner.

2. Device according to claim 1, **characterized in that** the at least one outlet (12) has at least one filling spout (16) that can be brought into a flow connection with the filling opening (4) of the cell to be filled (2), with the internal space (5) of the cell (2) being closed in a pressure-tight manner against the internal space (22) of the sealing container (20), in particular **in that** it can be inserted into the filling opening (4).

3. Device according to claim 1 or 2, **characterized in that** the at least one outlet (12) or the at least one filling spout (16) comprises sealing means (14), in particular a sealing ring, for closing off the internal space (5) of the cell (2) against the internal space (22) of the sealing container (20) in a pressure-tight manner.

4. Device according to one of the preceding claims, **characterized in that** at least one intermediate container (13) is formed as a cube-shaped, cylindrical, conical or funnel-shaped cup, which is open towards the top and comprises the at least one outlet (12) in its base (14).

5. Device according to one of the preceding claims, **characterized in that** multiple intermediate containers (13) with respectively at least one outlet (12) or outlet (12) with a filling spout (16) are provided.

6. Device according to one of the preceding claims, **characterized in that** the number and/or the arrangement of all outlets (12) or filling spouts (16) of the filling appliance (10) corresponds to the number and/or the arrangement of the filling openings (4) of the accumulator (3).

7. Device according to one of the preceding claims, **characterized in that** for the purpose of creating a vacuum in the internal space (22) of the sealing container (20) a vacuum device, in particular a vacuum pump, is provided, and/or for creating atmospheric excess pressure in the internal space (22) of the sealing container (20) a pressure source, in particular a pressure pump, is provided.

8. Device according to one of the preceding claims, **characterized in that** the pressure in the internal space (22) of the sealing container (20) can be controlled and/or regulated by means of a pressure source and/or a vacuum device, in particular within the range of 10 mbar to 2500 mbar, preferably in the range of 100 mbar to atmospheric pressure.

9. Device according to one of the preceding claims, **characterized in that** the sealing container (20) has a base plate (23) and a top part (24) which closes thereon in a pressure-tight manner and is removable, and which is lowered or pulled over the accumulator (3) and/or the filling appliance (10) preferably by means of a lifting device.

10. Method for filling at least one cell (2) of an accumulator (3) with electrolyte fluid (30) in the internal space (22) of a sealing container (20), comprising a device (1) according to one of the preceding claims, **characterized by** the following steps:
a. evacuating the interior space of the cell (5) via a filling opening (4) of the cell to be filled (2) by creating a vacuum in the internal space (22) of the sealing container (20);
b. filling at least one intermediate container (13) that is arranged in the internal space (22) of the sealing container (20) with electrolyte fluid (30), so that the intermediate container (13) is in pressure compensation with the internal space (22) of the sealing container (20) above the electrolyte fluid level (31);
c. increasing the pressure in the internal space (22) of the sealing container (20), so that electrolyte fluid (30) is conveyed from the intermediate container (13) into the cell (2) via at least one outlet (12) due to the pressure difference between the internal space (22) of the sealing container (20) and the internal space (22) of the cell (2), wherein prior to the filling process the intermediate container (13) is brought into a flow connection with the filling opening (4) of the cell (2) via the outlet (12), with the internal space (22) of the cell (2) being closed off against the internal space (22) of the sealing container (20) in a pressure-tight manner.

11. Method according to claim 10, **characterized in that** the pressure in the internal space (22) of the sealing container (20) is raised to atmospheric pressure or atmospheric excess pressure.

12. Method according to claim 10 or 11, **characterized in that** the pressure in the internal space (22) of the sealing container (20) is increased gradually, in particular first to atmospheric pressure and then to atmospheric excess pressure.

13. Method according to claim 10 or 11, **characterized in that** the pressure in the internal space (22) of the sealing container (20) is varied as it is being increased between two values, in particular between atmospheric pressure and atmospheric excess pressure.

14. Method according to one of the claims 10 to 13, **characterized in that** the steps of the method are repeated multiple times.

## Revendications

1. Dispositif (1) pour le remplissage d'au moins un élément (2) d'un accumulateur (3) avec un liquide électrolytique (30), comportant un dispositif de remplissage (10), une enceinte étanche (20) pouvant être mise sous vide pour recevoir le dispositif de remplissage (10) et l'accumulateur (3), et comportant également un dispositif d'amenée (11), guidé à travers la paroi (21) de l'enceinte, pour alimenter le dispositif de remplissage (10) en liquide électrolytique (30), **caractérisé en ce que** le dispositif de remplissage (10) comprend au moins une enceinte intermédiaire (13) pouvant être rempli de liquide électrolytique (30) qui, à l'état rempli au-dessus du niveau de liquide électrolytique (31), se trouve en équilibre de pression avec l'espace intérieur de l'enceinte étanche (20) et qui, par l'intermédiaire d'au moins une sortie (12), en dessous du niveau de liquide électrolytique (31), peut être amené en communication d'écoulement avec une ouverture de remplissage (4) de l'élément (2) à remplir, l'espace intérieur (5) de l'élément (2) étant fermé de manière étanche à la pression par rapport à l'espace intérieur (22) de l'enceinte étanche (20), dans lequel au moins une partie du dispositif de remplissage (10), notamment l'au moins une buse de remplissage (16) et/ou l'au moins une enceinte intermédiaire (13), est fixée de manière élastique à la partie supérieure (24) de l'enceinte étanche (20) et dans lequel le dispositif de remplissage (10) comprend des moyens de guidage mécaniques (15), notamment des boulons de réglage, pour amener la sortie ou la buse de remplissage de la ou des ouverture(s) de remplissage (4) de l'accumulateur (3) en communication d'écoulement à une position précise.

2. Dispositif selon la revendication 1, **caractérisé en ce que** l'au moins une sortie (12) comprend au moins une buse de remplissage (16) qui peut être amenée en communication d'écoulement avec l'ouverture de remplissage (4) de l'élément (2) à remplir en isolant de manière étanche à la pression l'espace intérieur (5) de l'élément (2) par rapport à l'espace intérieur (22) de l'enceinte étanche (20), et qui peut notamment être introduite dans l'ouverture de remplissage (4).

3. Dispositif selon la revendication 1 ou 2, **caractérisé en ce que** l'au moins une sortie (12) ou l'au moins buse de remplissage (16) comprend des moyens d'étanchéité (14), notamment une bague d'étanchéité, destinés à isoler de manière étanche à la pression l'espace intérieur (5) de l'élément (2) par rapport à l'espace intérieur (22) de l'enceinte étanche (20).

4. Dispositif selon l'une quelconque des revendications précédentes, **caractérisé en ce que** l'au moins une enceinte intermédiaire (13) est réalisée sous la forme d'une cuve parallélépipédique, cylindrique, conique ou en forme d'entonnoir qui est ouverte vers le haut et comprend dans sa partie inférieure (14) l'au moins une sortie (12).

5. Dispositif selon l'une quelconque des revendications précédentes, **caractérisé en ce qu'**il est prévu plusieurs enceintes intermédiaire (13) comportant chacune au moins une sortie (12) ou une sortie (12) munie de buses de remplissage (16).

6. Dispositif selon l'une quelconque des revendications précédentes, **caractérisé en ce que** le nombre et/ou l'agencement de toutes les sorties (12) ou buses de remplissage (16) du dispositif de remplissage (10) correspondent au nombre et/ou à l'agencement des ouvertures de remplissage (4) de l'accumulateur (3).

7. Dispositif selon l'une quelconque des revendications précédentes, **caractérisé en ce que**, pour établir un vide dans l'espace intérieur (22) de l'enceinte étanche (20), il est prévu un dispositif de mise sous vide, notamment une pompe à vide et/ou une source de pression, notamment une pompe de pression, pour établir pression supérieure à la pression atmosphérique dans l'espace intérieur (22) de l'enceinte étanche (20).

8. Dispositif selon l'une quelconque des revendications précédentes, **caractérisé en ce que** la pression régnant dans l'espace intérieur (22) de l'enceinte étanche (20) peut être commandée et/ou peut être régulée au moyen d'une source de pression et/ou d'un dispositif de mise sous vide, notamment dans l'intervalle de 10 mbar à 2500 mbar et de préférence, dans l'intervalle de 100 mbar à la pression atmosphérique.

9. Dispositif selon l'une quelconque des revendications précédentes, **caractérisé en ce que** l'enceinte étanche (20) comprend une plaque de fond (23) et une partie supérieure (24) fermant celle-ci de manière étanche à la pression et pouvant en être démontée, qui peut être abaissée ou encastrée, de préférence au moyen d'un dispositif de levage, sur l'accumulateur (3) et/ou sur le dispositif de remplissage (10).

10. Procédé pour le remplissage d'au moins un élément (2) d'un accumulateur (4) avec un liquide électrolytique (30) dans l'espace intérieur (22) d'une enceinte étanche (20) au moyen d'un dispositif (1) selon l'une quelconque des revendications précédentes, **caractérisé par** les étapes consistant à :
a) mettre sous vide l'espace intérieur (5) de l'élément, par l'intermédiaire d'une ouverture de remplissage (4) de l'élément (3) à remplir, en créant une dépression dans l'espace intérieur (22) de l'enceinte étanche (20) ;
b) remplir au moins une enceinte intermédiaire (13), disposée dans l'espace intérieur (22) de l'enceinte étanche (20), de liquide électrolytique (30), de manière à ce que l'enceinte intermédiaire (13), au-dessus du niveau de liquide électrolytique (31), se trouve en équilibre de pression avec l'espace intérieur (22) de l'enceinte étanche (20) ;
c) augmenter la pression régnant dans l'espace intérieur (22) de l'enceinte étanche (20), de manière à ce que du liquide électrolytique (30) soit entraîné depuis l'enceinte intermédiaire (13), par l'intermédiaire d'au moins une sortie (12), vers l'élément (2), du fait de la différence de pression entre l'espace intérieur (22) de l'enceinte étanche (20) et l'espace intérieur (5) de l'élément (2), dans lequel l'enceinte intermédiaire (13), avant le remplissage par l'intermédiaire de la sortie (12) et en isolant de manière étanche à la pression l'espace intérieur (5) de l'élément (2) par rapport à l'espace intérieur (22) de l'enceinte étanche (20), est amenée en liaison d'écoulement avec l'ouverture de remplissage (4) de l'élément (2).

11. Procédé selon la revendication 10, **caractérisé en ce que** la pression régnant dans l'espace intérieur (22) de l'enceinte étanche (20) est augmentée à la pression atmosphérique ou à une pression supérieure à la pression atmosphérique.

12. Procédé selon la revendication 10 ou 11, **caractérisé en ce que** la pression régnant dans l'espace intérieur (22) de l'enceinte étanche (20) est augmentée pas à pas, notamment en premier lieu à la pression atmosphérique puis à une pression supérieure à la pression atmosphérique.

13. Procédé selon la revendication 10 ou 11, **caractérisé en ce que** la pression régnant dans l'espace intérieur (22) de l'enceinte étanche (20) est amenée à varier lors de l'augmentation entre deux valeurs, notamment entre la pression atmosphérique et une pression supérieure à la pression atmosphérique.

14. Procédé selon l'une quelconque des revendications 10 à 13, **caractérisé en ce que** les étapes du procédé sont répétées plusieurs fois.
